(19) Europäisches Patentamt European Patent Office Office européen des brevets

(11) **EP 1 683 260 B1**

(12) **EUROPÄISCHE PATENTSCHRIFT**

(45) Veröffentlichungstag und Bekanntmachung des Hinweises auf die Patenterteilung:
**13.10.2010 Patentblatt 2010/41**

(21) Anmeldenummer: **04766469.3**

(22) Anmeldetag: **11.08.2004**

(51) Int Cl.:
*H02P 6/08* (2006.01)    *H02P 6/14* (2006.01)

(86) Internationale Anmeldenummer:
**PCT/EP2004/051766**

(87) Internationale Veröffentlichungsnummer:
**WO 2005/048444 (26.05.2005 Gazette 2005/21)**

(54) **ANSTEUERUNG EINES ELEKTROMOTORS MIT KONTINUIERLICHER EINSTELLUNG DES KOMMUTIERUNGSWINKELS**

CONTROL OF AN ELECTRIC MOTOR WITH CONTINUOUS ADJUSTMENT OF THE COMMUTATION ANGLE

COMMANDE D'UN MOTEUR ELECTRIQUE PAR REGLAGE CONTINU DE L'ANGLE DE COMMUTATION

(84) Benannte Vertragsstaaten:
**DE FR**

(30) Priorität: **12.11.2003 DE 10352749**

(43) Veröffentlichungstag der Anmeldung:
**26.07.2006 Patentblatt 2006/30**

(73) Patentinhaber: **Brose Fahrzeugteile GmbH & Co. KG, Würzburg**
**97076 Würzburg (DE)**

(72) Erfinder: **SCHWARZKOPF, Johannes**
**97828 Marktheidenfeld (DE)**

(74) Vertreter: **Reinhard - Skuhra - Weise & Partner GbR**
**Patent- und Rechtsanwälte**
**Friedrichstrasse 31**
**80801 München (DE)**

(56) Entgegenhaltungen:
**GB-A- 2 388 090    US-A- 5 677 605**

• **JACK A G ET AL: "The design of small high speed brushless DC drives with precise speed stability" CONFERENCE RECORD OF THE INDUSTRY APPLICATIONS SOCIETY ANNUAL MEETING, 2. Oktober 1988 (1988-10-02), Seiten 500-506, XP010519130 PITTSBURGH**

**Beschreibung**

Die Erfindung bezieht sich auf ein Verfahren nach dem Oberbegriff des Anspruches 1 zur Kommutierung der mindestens einen Phase eines Elektromotors. Die Erfindung bezieht sich weiterhin auf eine Vorrichtung zur Durchführung des Verfahrens.

Ein Umrichter (oder Stromwender) wird herkömmlicherweise verwendet, um eine Phase des elektromagnetischen Erregerfelds eines Elektromotors im Bereich des Nulldurchgangs umzupolen. Als Nulldurchgang wird die Stellung der Phase bezeichnet, in welcher die Phase parallel zu dem Statorfeld des Motors ausgerichtet ist, so dass kein Drehmoment auf den Rotor des Motors ausgeübt wird.

Bei einem modernen Elektromotor, wie er insbesondere in der Antriebstechnik von Elektrofahrzeugen verwendet wird, erfolgt die Kommutierung zumeist elektronisch mittels Leistungstransistoren.

Gattungsgemäße Verfahren mit kontinuierlicher Variation des Kommutierungswinkels und zugehörige Vorrichtungen sind aus GB 2 388 090 A und US 6,677,605 A bekannt.

Für die Kommutierung eines elektronisch kommutierten Motors wird andererseits häufig ein elektrischer Vollzyklus, d.h. eine volle Drehung des Erregerfeldes um 360°, in gleichförmige Zonen (oder "States") unterteilt. Zu Beginn einer jeden Zone können die Leistungstransistoren für die Kommutierung einer Phase an- oder ausgeschaltet werden. Der Zustand der Phase bleibt dann zumindest bis zum Ende der Zone erhalten, kann aber optional durch ein pulsweitenmoduliertes (PWM)-Signal überlagert werden.

Durch die Aufteilung des Vollzyklusses in Zonen wird eine diskrete Anzahl möglicher Kommutierungswinkel der oder jeder Phase festgelegt. Als Kommutierungswinkel ist hierbei derjenige Teil des Vollzyklusses bezeichnet, während dessen die oder jede Phase angesteuert, d.h. erregt ist. Bei einer Aufteilung des Vollzyklusses in zwölf gleiche Zonen kann der Kommutierungswinkel beispielsweise 180°, 150°, 120°, ... betragen. Bisher wird ein Elektromotor häufig bei einem festen Kommutierungswinkel betrieben.

Der Erfindung liegt die Aufgabe zugrunde, ein Verfahren zur Kommutierung eines Elektromotors anzugeben, durch welches für jeden Betriebspunkt des Motors ein gutes Antriebsergebnis erzielt wird. Ein gutes Antriebsergebnis äußert sich insbesondere in einer niedrigen und gleichmäßigen Stromaufnahme des Motors bei vergleichsweise hohem und zeitlich stabilem Drehmoment, einer geringe Belastung des Motors und/oder des Umrichters, einer guten Ausnutzung der Leistungsfähigkeit des Motors, einer guten elektromagnetischen Verträglichkeit, etc. Der Erfindung liegt weiterhin die Aufgabe zugrunde, eine besonders geeignete Vorrichtung zur Durchführung des genannten Verfahrens anzugeben.

Bezüglich des Verfahrens wird die Aufgabe erfindungsgemäß gelöst durch die Merkmale des Anspruchs 1. Danach ist vorgesehen, den Kommutierungswinkel der oder jeder Phase des Elektromotors in Abhängigkeit der Drehfrequenz des Erregerfeldes und/oder einer für die Antriebsleistung charakteristischen Stellgröße kontinuierlich zu variieren.

Die Erfindung geht von der Überlegung aus, dass eine Variation des Kommutierungswinkels mit der Drehzahl des Motors oder der Motorleistung vorteilhaft ist. So führt ein Betrieb des Motors unter vergleichsweise hohem Kommutierungswinkel im hohen Drehzahl- oder Leistungsbereich zu einer gute Ausnutzung der Leistungsfähigkeit des Motors, einer geringen Stromwelligkeit und einer vergleichsweise niedrigen Verlustleistung. Andererseits hat im niedrigen Drehzahl- oder Leistungsbereich der Betrieb des Motors unter vergleichsweise kleinem Kommutierungswinkel den Vorteil, dass die Transistoren und Kondensatoren des Umrichters vergleichsweise gering belastet werden, insbesondere zumal auf diese Weise ein Einsatz von PWM nicht oder in geringerem Maße erforderlich ist. Der Erfindung liegt weiterhin die Überlegung zugrunde, dass eine diskrete, d.h. stufenweise Änderung des Kommutierungswinkels eine Unstetigkeit des Betriebsverhaltens des Motors zur Folge hätte. Eine solche Unstetigkeit könnte erkanntermaßen im Betrieb des Motors nachteilig sein. Insbesondere wäre zu erwarten, dass der Motor in einem Übergangsbereich zwischen zwei Betriebspunkten hin und her springt. Hierdurch würden starke Schwankungen in der Stromaufnahme und dem Drehmoment auftreten, wodurch durch ständige Beschleunigung und Verzögerung des Rotors eine vergleichsweise hohe Motorbelastung auftreten würde.

Indem der Kommutierungswinkel erfindungsgemäß kontinuierlich variiert wird, kann die Kommutierung des Motors in einfacher Weise auf jeden Betriebspunkt des Motors besonders gut angepasst werden, ohne dass eine solche Unstetigkeit auftritt.

In einer besonders einfach zu realisierenden Ausführung der Erfindung wird der Vollzyklus des Erregerfeldes in eine Anzahl von Zonen unterteilt, wobei die oder jede Phase des Motors entsprechend einem in Abhängigkeit dieser Zonen hinterlegten Steuermuster kommutiert wird. Dabei wird durch Variation der Winkelausdehnung mindestens zweier Zonen die kontinuierliche Variation des Kommutierungswinkels ermöglicht.

Vorzugsweise sind die Zonen in zwei Gruppen unterteilt, wobei Zonen derselben Gruppe stets dieselbe Winkelausdehnung aufweisen. Dabei sind die Zonen der verschiedenen Gruppen alternierend zueinander angeordnet, so dass eine Zone der ersten Winkelausdehnung stets auf eine Zone der zweiten Winkelausdehnung folgt und umgekehrt. Im Zuge der Einstellung des Kommutierungswinkels können dabei die Zonen der ersten Gruppe zugunsten der Zonen der zweiten Gruppe hinsichtlich ihrer Winkelausdehnung verkürzt oder verlängert werden. Die oder jede Phase wird zweckmäßigerweise über eine ungerade Anzahl aufeinander folgender Zonen angesteuert (oder erregt). Der Kommutierungswinkel wird folglich durch die Summe der Winkelausdehnungen von 1,3,5, ... aufeinander folgender Zonen festgelegt und variiert somit mit dem Größenverhältnis der Zonen der beiden Gruppen.

Bevorzugt wird der Kommutierungswinkel im Hinblick auf den Leistungsbereich des Motors derart eingestellt, dass der Kommutierungswinkel bei einer geringen Drehzahl oder bei einer geringen Leistung des Motors, minimal und bei einer hohen Drehzahl oder einer hohen Leistung maximal ist.

Für eine bedarfsangepasste Einstellung des Kommutierungswinkels ist es besonders vorteilhaft als Steuervariable für den Kommutierungswinkel nicht die reine Drehfrequenz heranzuziehen, sondern eine Stellgröße, die, ähnlich der Gaspedalstellung eines Automobils, für die Motorleistung charakteristisch ist. Diese Stellgröße wird zeckmäßigerweise, insbesondere mittels eines PI(Proportional/Integral)-Reglers aus der (Ist-) Drehfrequenz und einer zugehörigen Sollgröße abgeleitet.

Das Betriebsverhalten des Motors wird bevorzugt weiterhin durch Pulsweitenmodulierung der Phase verbessert. Dies bedeutet, dass die oder jede Phase innerhalb des Kommutierungswinkels nicht konstant, sondern gepulst angesteuert wird. Die Weite, d.h. die Winkelausdehnung, dieser Einzelpulse wird wiederum in Abhängigkeit der Drehfrequenz oder der Stellgröße moduliert, d.h. variiert.

Als besonders vorteilhaft hat es sich erwiesen, einzelne der vorstehend beschriebenen Parameter zur Steuerung des Betriebsverhaltens des Elektromotors, d.h. des Kommutierungswinkels sowie der Pulsweitenmodulierung in einem bestimmten Drehzahl- oder Leistungsbereich des Motors bevorzugt einzusetzen. In diesem Sinne wird in einem Niederleistungsbereich des Motors bevorzugt Pulsweitenmodulierung eingesetzt, während der Kommutierungswinkel konstant gehalten wird. In einem Hochleistungsbereich des Motors wird in dieser Ausführung des erfindungsgemäßen Verfahrens dann der Kommutierungswinkel zwischen seinem Minimalwert und seinem Maximalwert variiert, während das Pulsweitenverhältnis konstant gehalten wird. Das Pulsweitenverhältnis beträgt hier insbesondere 100%, d.h. die oder jede Phase wird während des Kommutierungswinkels konstant angesteuert.

Das vorstehend beschriebene Verfahren ist wahlweise für eine unipolare Ansteuerung als auch eine bipolare Ansteuerung der oder jeder Phase vorgesehen.

Bezüglich der zur Durchführung des vorstehend beschriebenen Verfahrens vorgesehenen Vorrichtung wird die Aufgabe erfindungsgemäß gelöst durch die Merkmale des Anspruchs 10. Danach umfasst die Vorrichtung einen Umrichter, der die mindestens eine Phase eines Elektromotors ansteuert. Der Umrichter wird seinerseits durch eine Steuereinheit angesteuert, wobei diese zur Ausführung des vorstehend beschriebenen Verfahrens ausgebildet ist.

Der Umrichter ist vorzugsweise ein mit Leistungshalbleiterbauteilen zur Beschaltung der oder jeder Phase bestückter elektronischer Umrichter. Die Steuereinheit ist hierbei insbesondere als mit entsprechenden Software-Modulen ausgestatteter Mikrocontroller ausgeführt. Denkbar wäre eine Anwendung des erfindungsgemäßen Verfahrens aber auch bei einem mechanischen Umrichter. Die verfahrensgemäße Zoneneinteilung könnte hier durch geeignete, z.B. trapezförmige Gestaltung der Stromabnehmerflächen des Umrichters realisiert werden. Eine kontinuierliche Änderung des Kommutierungswinkels könnte dabei mittels einer geeigneten Steuereinheit durch leistungsabhängige axiale Verschiebung des Umrichters bezüglich der korrespondierenden Schleifkontakte erreicht werden.

Der Steuereinheit wird bevorzugt durch einen Sensor die (zeitabhängige) Orientierung des Erregerfelds und/ oder dessen Drehfrequenz als Eingangsgröße zugeführt.

Nachfolgend werden Ausführungsbeispiele der Erfindung anhand einer Zeichnung näher erläutert. Darin zeigen:

FIG 1     schematisch einen Elektromotor mit einem vorge- schalteten Umrichter und einer Steuereinheit zur Ansteuerung des Umrichters,

FIG 2     schematisch eine Orientierung des elektromagneti- schen Erregerfelds bei einer dreiphasigen, bipolar angesteuerten Ausführung des Elektromotors gemäß FIG 1 innerhalb eines Vollzyklusses,

FIG 3     schematisch ein Steuermuster für den Elektromotor in Ausführung gemäß FIG 2,

FIG 4     in einer Darstellung gemäß FIG 3 ein Steuermuster für eine fünfphasige, unipolar angesteuerte Ausfüh- rung des Elektromotors,

FIG 5     ein Stellglied für die Ableitung einer der Steuer- einheit als Eingangsgröße zugeführten Stellgröße anhand der (Ist-)Drehzahl und einer zugehörigen Sollgröße,

FIG 6     in einem schematischen Flussdiagramm ein Verfahren zur Kommutierung des Elektromotors gemäß FIG 1 und

FIG 7     in einem Diagramm im Zuge des Verfahrens gemäß FIG 6 in Abhängigkeit der Stellgröße vorgenommene Para- metereinstellungen.

Einander entsprechende Teile und Größen sind in allen Figuren stets mit denselben Bezugszeichen versehen.

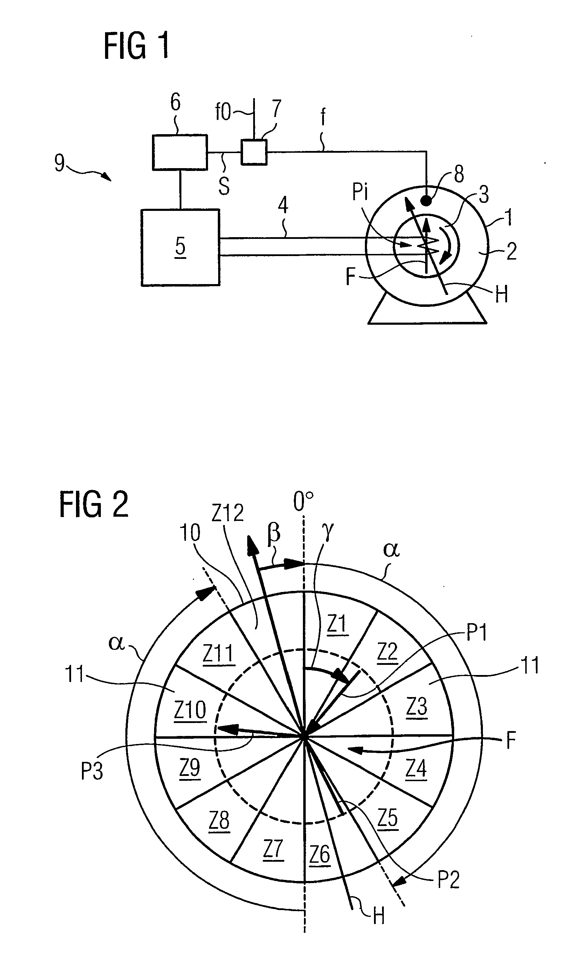

Das in FIG 1 grob vereinfacht dargestellte Schema zeigt einen Elektromotor 1 mit einem in einem Stator 2 drehbaren Rotor 3. Der Rotor 3 trägt einen Erregerkreis 4 zur Erzeugung eines elektromagnetischen Erregerfelds F1, das mit dem Rotor 3, und damit gegen ein ortsfestes elektromagnetisches Statorfeld H rotiert.

Wie in dem vereinfachten Schema gemäß FIG 1 nicht explizit dargestellt ist, weist der Elektromotor 1 in der Regel mehrere Erregerkreise 4 auf. Jeder Erregerkreis 4 produziert somit lediglich eine Komponente des gesamten Erregerfelds F. Ein Erregerkreis 4 sowie die von diesem erzeugte Komponente des Erregerfelds F sind zusammenfassend als Phase Pi (i = 1,2, 3, ...) bezeichnet.

Der Erregerkreis 4 jeder Phase Pi ist an einen Umrichter 5 angeschlossen, mittels welchem ein Feld erzeugender Stromfluss in dem Erregerkreis 4 induzierbar ist. Dies wird als Ansteuerung oder Erregung der jeweiligen Phase Pi bezeichnet. Es wird dabei zwischen unipolarer und bipolarer Ansteuerung unterschieden. Bei unipolarer Ansteuerung ist der Stromfluss binär, d.h. zwischen einem "0"-Status und einem "1"-Status ein- und ausschaltbar. Bei bipolarer Ansteuerung ist der Stromfluss im Erregerkreis 4 umpolbar, so dass die jeweilige Phase Pi zwischen den Statuswerten -1,0 und +1 steuerbar ist. Bei Umpolung des Stromflusses im Erregerkreis 4 der Phase Pi wird auch die Orientierung der zugehörigen Feldkomponente des Erregerfelds F umgepolt.

Die Beschaltung der Phasen Pi geschieht innerhalb des Umrichters 5 mittels (nicht näher dargestellter) Leistungstransistoren. Der Umrichter 5, und insbesondere dessen Leistungstransistoren, werden von einer als Mikrocontroller ausgeführten Steuereinheit 6 angesteuert. Die Steuereinheit 6 ist eingangsseitig über ein Stellglied 7 mit einem im Elektromotor 1 angeordneten Sensor 8, insbesondere einem Hall-Sensor, verbunden.

Der Sensor 8 erhebt ein für die zeitabhängige Orientierung des Erregerfelds F, und damit dessen Drehfrequenz f charakteristische Messgröße und leitet diese dem Stellglied 7 zu. Dem Stellglied 7 wird des Weiteren eine Sollgröße f0 für die Drehfrequenz zugeleitet. Anhand der (Ist)-Drehfrequenz f und der zugehörigen Sollgröße f0 ermittelt das Stellglied 7 auf nachfolgend näher beschriebene Weise eine Stellgröße S und leitet diese der Steuereinheit 6 zu.

Der Umrichter 5 und die Steuereinheit 6 bilden zusammen mit dem Stellglied 7 und dem Sensor 8 eine Vorrichtung 9 zur Kommutierung der oder jeder Phase Pi des Elektromotors 1.

Das in FIG 2 abgebildete Schema zeigt eine Orientierung, d.h. eine "Momentaufnahme", des Erregerfelds F innerhalb eines Vollzyklusses 10. Als Vollzyklus wird eine Drehung des Erregerfelds F um einen Vollkreis von 360° bezeichnet. In der Darstellung gemäß FIG 2 ist der Elektromotor 1 dreiphasig und bipolar ansteuerbar ausgeführt. Das Erregerfeld F umfasst somit die drei Phasen P1,P2 und P3. Die Pfeilrichtung deutet hierbei die Polarität der jeweiligen Feldkomponente an. So ist die Phase P1 positiv angesteuert ("1"-Status), d.h. mit der positiven Versorgungsspannung verbunden. Die Phase P3 ist negativ angesteuert ist ("-1"-Status), d.h. mit negativer Versorgungsspannung oder GND verbunden. Die Phase P2 ist nicht angesteuert ("0"-Status), wie durch die fehlende Pfeilspitze angedeutet ist.

Der Vollzyklus 10 ist in zwölf Zonen Zi (i = 1,2, ...,12) aufgeteilt. Die Richtung des Statorfelds H verläuft in der Darstellung durch die Zonen Z6 und Z12. Die Einteilung des Vollzyklusses 10 in Zonen Zi dient einer vereinfachten Ansteuerung des Stromenders 5, indem der Status einer Phase Pi stets dann geändert werden kann, wenn die Phase die Grenzlinie zwischen zwei Zonen Zi überquert. Gemäß FIG 2 wird jede Phase Pi beim Übergang von Zone Z0 auf Z1 positiv angesteuert (0 -> 1) und beim Übergang von Zone Z5 auf Zone Z6 wieder abgesteuert (1 -> 0). Beim Übergang von Zone Z6 auf Zone Z7 wird die Phase Pi negativ angesteuert (0 -> -1) und beim Übergang von Zone Z11 auf Z12 wieder abgesteuert (-1 -> 0).

Der Winkel zwischen Ansteuerung und Absteuerung einer Phase Pi ist als Kommutierungswinkel $\alpha$ bezeichnet. Die innerhalb des Kommutierungswinkels $\alpha$ eingeschlossenen Zonen Zi bilden zusammen einen Kommutierungsbereich 11. Bei der in FIG 2 beispielhaft dargestellten Aufteilung des Vollzyklusses 10 in zwölf gleiche Zonen Zi mit einer Winkelausdehnung von je 30°, und Kommutierungsbereichen 11, die jeweils fünf Zonen Zi umfassen, beträgt der Kommutierungswinkel $\alpha$ = 150°.

Der Winkel zwischen der Orientierung des Statorfeldes H (und damit dem Nulldurchgang einer Phase Pi) und dem Beginn des Kommutierungsbereichs 11 wird als Zündwinkel $\beta$ bezeichnet. Im Beispiel gemäß FIG 2 beträgt der Zündwinkel $\beta \approx$ 15°.

Um den Kommutierungswinkel $\alpha$ kontinuierlich verstellen zu können, ist die Winkelausdehnung der Zonen Zi variabel. Die Zonen Zi werden hierbei alternierend in eine die ungeradzahligen Zonen Z1 (1 = 1,3,5, ...,11) umfassende erste Gruppe und eine die geradzahligen Zonen Zm (m = 2,4,6, ...,12) umfassende zweite Gruppe aufgeteilt. Die Zonen Z1 der ersten Gruppe erhalten dabei eine Winkelausdehnung von

$$\delta 1 = \frac{360°}{n} + \Delta\delta \ . \qquad\qquad \text{GLG} \quad 1$$

Die Zonen Zm erhalten entsprechend eine Winkelausdehnung von

$$\delta 2 = \frac{360°}{n} - \Delta\delta \; . \hspace{4cm} \text{GLG 2}$$

n bezeichnet dabei die Gesamtanzahl der Zonen Zi, im Beispiel gemäß FIG 2 somit n = 12. Für den Differenzwinkel $\Delta\delta$ gilt

$$-\frac{360°}{n} \leq \Delta\delta \leq \frac{360°}{n} \; . \hspace{3cm} \text{GLG 3}$$

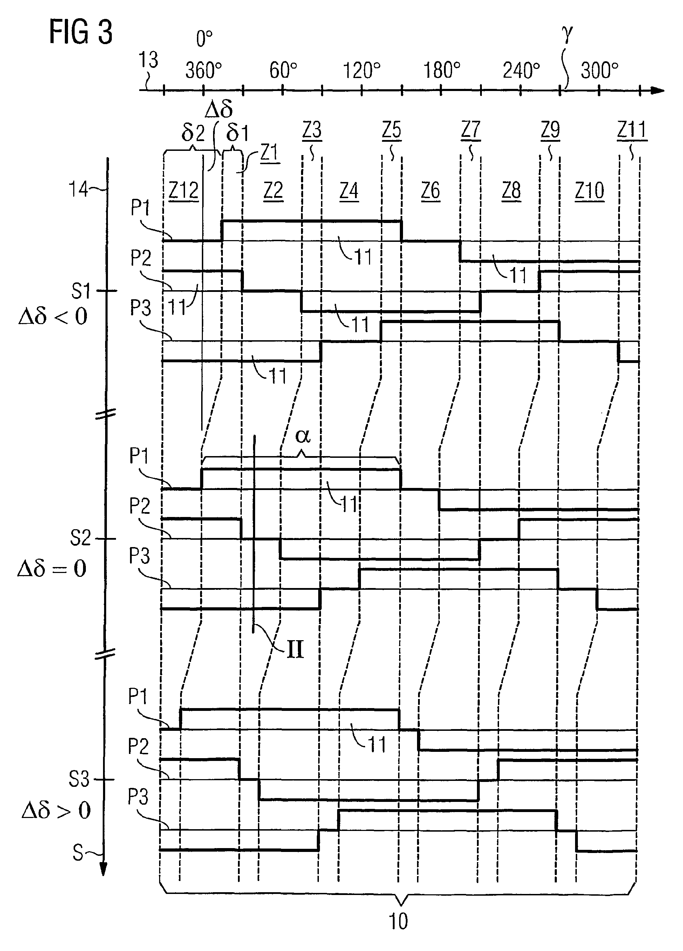

FIG 3 zeigt schematisch ein Steuermuster 12, wie es zur Ansteuerung des Umrichters 5 in der Steuereinheit 6 hinterlegt ist. Das Steuermuster 12 gemäß FIG 3 ist für einen dreiphasigen, bipolaren Elektromotor 1 ausgelegt, der dem Schema gemäß FIG 2 entspricht. Das Steuermuster 12 ist in Form eines zweidimensionalen Diagrammes dargestellt, auf dessen Horizontalachse 13 der Orientierungswinkel $\gamma$ der Phase P1 innerhalb des Vollzyklusses 10 (vgl. FIG 2) angetragen ist. Auf der Vertikalachse 14 ist die Stellgröße S kontinuierlich angetragen. Das hinterlegte Steuermuster 12 ist also innerhalb eines vorgegebenen Intervalls für jeden beliebigen Wert der Stellgröße S definiert. Aus Gründen der Darstellbarkeit ist das Steuermuster 12 in FIG 3 nur für drei daraus beispielhaft ausgewählte, diskrete Werte S1,S2 und S3 der Stellgröße S abgebildet.

In der Darstellung des Steuermusters 12 gemäß FIG 3 äußern sich die Zonen Zi als in horizontaler Richtung nebeneinander angeordnete Flächen, die durch gestrichelte Linien gegeneinander abgegrenzt sind. In Übereinstimmung mit dem auf der Horizontalachse 13 angetragenen Orientierungswinkel $\gamma$ bezieht sich auch die in FIG 3 dargestellte Zonenbeschriftung auf die Orientierung der Phase P1 als Referenzphase. Die Position der Phase P2 ist hierzu stets um vier Zonen, die Position der Phase P3 stets um acht Zonen versetzt. Der Status jeder Phase Pi bei gegebenem Wert S1,S2,S3 der Stellgröße S ist in FIG 3 in Form einer Stufenfunktion mit den Werten -1,0,1 in Abhängigkeit des Orientierungswinkels $\gamma$ wiedergegeben.

Aus FIG 3 ist ersichtlich, dass in Abhängigkeit der Stellgröße S das Größenverhältnis $\delta 1/\delta 2$ benachbarter Zonen Zi und Z(i $\pm$ 1) variiert wird. So ist bei S = S1 der Differenzwinkel $\Delta\delta$ negativ, so dass $\delta 1 < \delta 2$ gilt. Umgekehrt ist bei S = S3 der Differenzwinkel $\Delta\delta$ positiv, so dass $\delta 1 > \delta 2$ gilt. Bei S = S2 wird der in FIG 2 dargestellte Spezialfall erreicht, bei dem der Differenzwinkel $\Delta\delta$ verschwindet und dementsprechend alle Zonen Zi die gleiche Winkelausdehnung $\delta 1 = \delta 2$ aufweisen. Die in FIG 2 dargestellte momentane Orientierung der Phasen P1,P2 und P3 ist in FIG 3 durch einen mit II gekennzeichneten senkrechten Strich angedeutet.

Durch Vergleich entsprechender Kommutierungsbereiche 11 zu verschiedenen Werten S1,S2,S3 der Stellgröße S wird deutlich, dass der (der Länge des Kommutierungsbereichs 11 entsprechende) Kommutierungswinkel $\alpha$ infolge der Änderung des Differenzwinkels $\Delta\delta$ kontinuierlich variiert wird. Wie aus der Darstellung gemäß FIG 3 direkt zu entnehmen ist, gilt

$$\alpha = m \cdot \frac{360°}{n} + \Delta\delta \; , \hspace{3cm} \text{GLG 4}$$

wobei m die Anzahl von Zonen Zi innerhalb eines Kommutierungsbereichs 11 bezeichnet. Allgemein ist m ungeradzahlig. Gemäß FIG 3 ist m = 5.

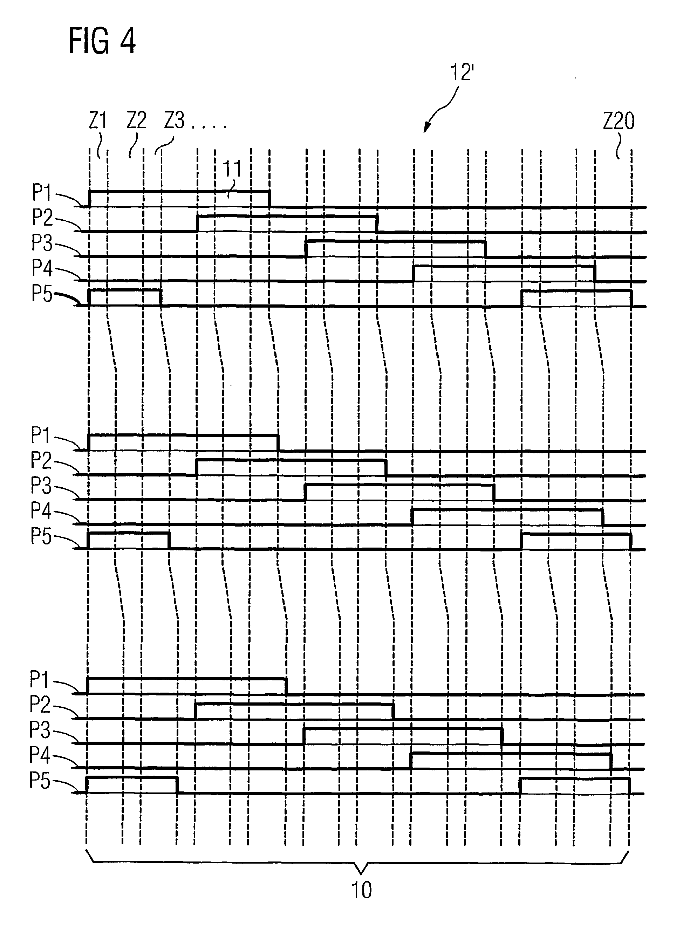

In FIG 4 ist ein alternativ ausgeführtes Steuermuster 12' dargestellt, das zur Ansteuerung einer fünfphasigen, unipolar angesteuerten Ausführung des Elektromotors 1 ausgelegt ist. Das Steuerprogramm 12 gemäß FIG 4 umfasst demnach Statusfunktionen für fünf Phasen Pi (i = 1,2, ...,5), die entsprechend der unipolaren Ansteuerung zwischen den diskreten Werten 0 und 1 variieren. Weiterhin ist der Vollzyklus 10 hier in zwanzig Zonen Zi (i = 1,2,3, ...,20) gegliedert. Das Steuermuster 12' entspricht ansonsten dem in FIG 3 beschriebenen Steuermuster 12.

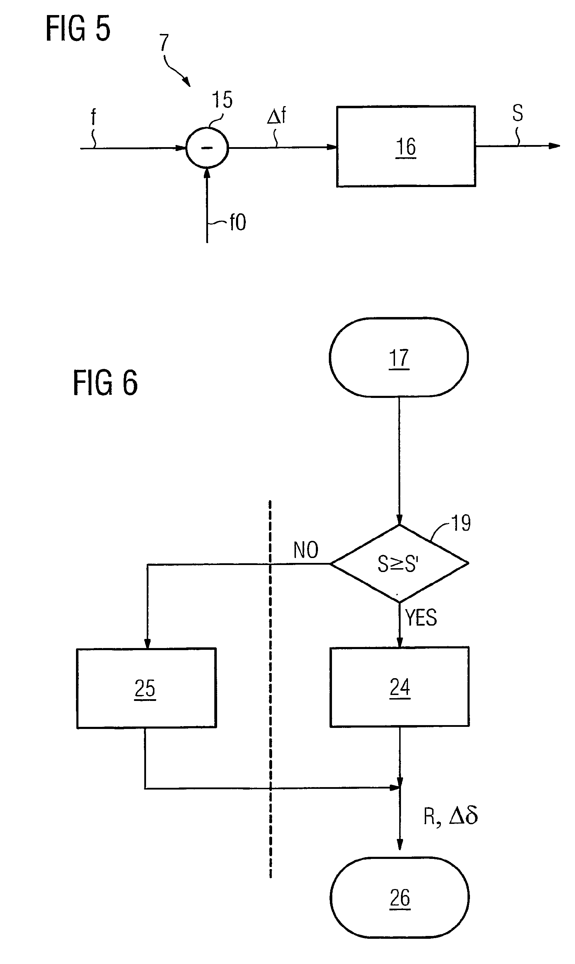

Die Funktionsweise des Stellglieds 7 ist in FIG 5 näher ausgeführt. Hieraus ist erkennbar, dass die von dem Sensor 8 erhobene Drehfrequenz f und die zugehörige Sollgröße f0 einem Differenzmodul 15 zugeführt werden. Dieses gibt eine Differenzfrequenz $\Delta f$ an einen PI(Proportional/Integral)-Regler 16 aus. Der PI-Regler 16 erzeugt die Stellgröße S, die - ähnlich der Gaspedalstellung eines Automobils - ein Maß für die momentane Leistung des Elektromotors 1 ist.

In FIG 6 ist das von dem Stellglied 7, der Steuereinheit 6 und dem Umrichter 5 durchgeführte Verfahren zur Kommutierung des Elektromotors 1 in einem schematisch vereinfachten Flussdiagramm dargestellt. Danach wird zunächst durch ein Modul 17 die Stellgröße S erhoben und einem Auswahlmodul 19 zugeführt.

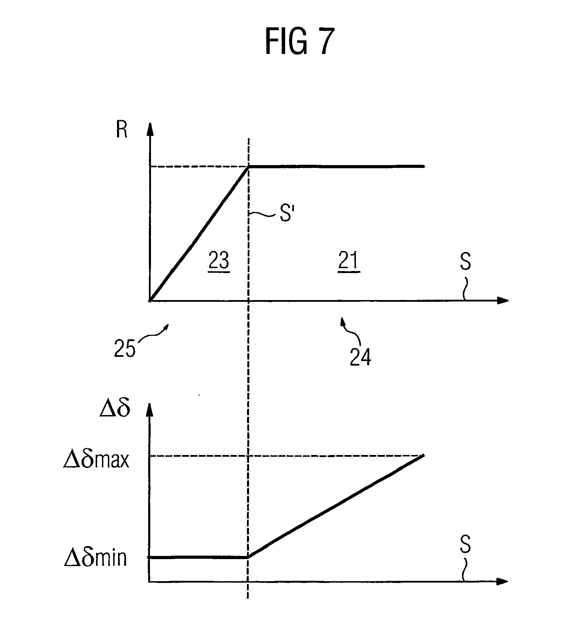

Das Auswahlmodul 19 prüft, ob die Stellgröße S mindestens einem vorgegebenen Schwellwert S' entspricht, der einen Hochleistungsbereich 21 (FIG 7) des Elektromotors 1 von einem Niederleistungsbereich 22 abgrenzt. Ist die Bedingung S $\geq$ S' erfüllt, so wird ein Modul 24 angesteuert. Anderenfalls, d.h. wenn sich der Elektromotor 1 im Niederleistungsbereich 23 befindet, ein Modul 25.

In jedem der Module 24 und 25 sind Regeln zur Ableitung einer Anzahl von Parametern in Abhängigkeit der Stellgröße S hinterlegt. Diese Parameter umfassen das so genannte Pulsweitenverhältnis R, den Differenzwinkel $\Delta\delta$.

Das Pulsweitenverhältnis R wird im Rahmen einer Pulsweitenmodulation einer Phase Pi während des Kommutierungsbereichs 11 benötigt. Hierbei wird die Phase Pi während des Kommutierungsbereichs 11 pulsartig angesteuert. Das Pulsweitenverhältnis R gibt hierbei an, welcher Anteil des gesamten Kommutierungsbereichs 11 durch die Summe der Pulse eingenommen wird. So wird bei einem Pulsweitenverhältnis von R = 50% die Phase Pi während des Kommutierungsbereichs 11 insgesamt nur zu 50% angeregt, während die restlichen 50% des Kommutierungsbereichs 11 durch Pausen zwischen den Pulsen eingenommen werden. Bei einem Pulsweitenverhältnis R = 100% setzen die Pulse dagegen unmittelbar aneinander an, so dass die Phase Pi während des ganzen Kommutierungsbereichs 11 konstant angesteuert wird. Die Frequenz des PWM-Signals ist deutlich höher als die Kommutierungsfrequenz.

Wie aus FIG 7 erkennbar ist, wird die Kommutierung des Elektromotors 1 im Hochleistungsbereich 21 durch Variation des Differenzwinkels $\Delta\delta$, und damit nach GLG 4 durch Variation des Kommutierungswinkels $\alpha$ gesteuert. Im Niederleistungsbereich 23 wird dagegen Pulsweitenmodulation zur Steuerung der Kommutierung eingesetzt.

Im Hochleistungsbereich 21 werden die Parameter R und $\Delta\delta$ entsprechend nach den im Modul 24 hinterlegten Gleichungen

$$R = 100\% \qquad \text{und} \qquad\qquad \text{GLG 5a}$$

$$\Delta\delta = \Delta\delta\min + c\cdot\left(S - S'\right) \qquad\qquad \text{GLG 5b}$$

bestimmt. Dabei ist $\Delta\delta$min ein vorgegebener Minimalwert des Differenzwinkels $\Delta\delta$ und c eine vorgebbare Konstante, die derart gewählt ist, dass $\Delta\delta \leq \Delta\delta$max gilt. Nach GLG 4 wird bei der Änderung des Differenzwinkels $\Delta\delta$ auch der Kommutierungswinkel $\alpha$ zwischen einem im Niederleistungsbereich 23 eingestellten Minimalwert und einem im Hochleistungsbereich 20 eingestellten Maximalwert variiert.

Im Niederleistungsbereich 23 werden die Parameter R und $\Delta\delta$ nach den im Modul 25 hinterlegten Gleichungen

$$R = \frac{S}{S'}\cdot 100\% \qquad \text{und} \qquad\qquad \text{GLG 6a}$$

$$\Delta\delta = \Delta\delta\min \qquad\qquad \text{GLG 6b}$$

eingestellt.

Soll beispielsweise bei dem dreiphasigen Elektromotor 1 gemäß FIG 2 und FIG 3 der Kommutierungswinkel $\alpha$ in Abhängigkeit der Stellgröße S zwischen 120° und 150° sein, so sind $\Delta\delta$min = -360°/n und $\Delta\delta$max = 0 zu wählen.

Die Parameter R und $\Delta\delta$ werden einem Ansteuermodul 26 zugeführt, das anhand des Steuermusters 12,12' die Leistungstransistoren des Umrichters 5 ansteuert. Jeder in dem Steuermuster 12,12' mit einem entsprechenden Orientierungswinkel $\gamma$ angegebene Schaltvorgang kann unter Verwendung der Gleichung

$$t = t0 + \frac{\gamma}{360°\cdot f} + \Delta t \qquad\qquad \text{GLG 7}$$

direkt in einen entsprechenden Schaltzeitpunkt t umgerechnet werden. t0 bezeichnet hierbei den Zeitpunkt des letzten Nulldurchgangs der Phase P1. Der Zeitpunkt t0 wird zusammen mit der momentanen Drehfrequenz f von dem Sensor 8 geliefert. Über die vorgebbare Zeitspanne $\Delta$t kann der Zündwinkel $\beta$ eingestellt werden.

**Patentansprüche**

**1.** Verfahren zur Kommutierung der mindestens einen Phase (Pi) eines Elektromotors (1), bei dem der Kommutierungswinkel ($\alpha$) der oder jeder Phase (Pi) in Abhängigkeit der Drehfrequenz (f) des elektromagnetischen Erregerfeldes (F) des Elektromotors (1) und/oder einer für die Antriebsleistung charakteristischen Stellgröße (S) kontinuierlich variiert wird,
**dadurch gekennzeichnet, dass** ein Vollzyklus (10) des Erregerfeldes (F) in eine Anzahl (n) von Zonen (Zi) unterteilt wird, und die oder jede Phase (Pi) entsprechend einem in Abhängigkeit dieser Zonen (Zi) hinterlegten Steuermuster (12,12') kommutiert wird, wobei die Winkelausdehnung ($\delta 1, \delta 2$) mindestens zweier Zonen (Zi) zur Einstellung des Kommutierungswinkels ($\alpha$) variiert wird.

**2.** Verfahren nach Anspruch 1,
**dadurch gekennzeichnet, dass** der Vollzyklus (10) in alternierend aufeinander folgende Zonen (Z1) einer ersten Gruppe und Zonen (Zm) einer zweiten Gruppe aufgeteilt ist, wobei Zonen (Zl,Zm) der selben Gruppe jeweils die gleiche Winkelausdehnung ($\delta 1, \delta 2$) aufweisen.

**3.** Verfahren nach Anspruch 2,
**dadurch gekennzeichnet, dass** die oder jede Phase (Pi) über eine ungerade Anzahl (m) aufeinanderfolgender Zonen (Zi) angesteuert wird.

**4.** Verfahren nach einem der Ansprüche 1 bis 3,
**dadurch gekennzeichnet, dass** der Kommutierungswinkel ($\alpha$) zwischen einem einer geringen Drehzahl (f) und/ oder Leistung entsprechenden Minimalwert und einem einer hohen Drehzahl (f) und/oder Leistung entsprechenden Maximalwert variiert wird.

**5.** Verfahren nach einem der Ansprüche 1 bis 4,
**dadurch gekennzeichnet, dass** anhand der Drehfrequenz (f) und einer zugehörigen Sollgröße (f0) die zur Einstellung des Kommutierungswinkels ($\alpha$) herangezogene, für die Leistung charakteristische Stellgröße (S) abgeleitet wird.

**6.** Verfahren nach einem der Ansprüche 1 bis 5,
**dadurch gekennzeichnet, dass** die oder jede Phase (Pi) in Abhängigkeit der Drehfrequenz (f) des Erregerfeldes (F) und/oder der Stellgröße (S) pulsweitenmoduliert angesteuert wird.

**7.** Verfahren nach Anspruch 6,
**dadurch gekennzeichnet, dass** in einem durch einen geringen Wert der Drehfrequenz (f) oder Stellgröße (S) **gekennzeichnet**en Niederleistungsbereich (23) bei konstantem Kommutierungswinkel ($\alpha$) die oder jede Phase (Pi) pulsweitenmoduliert angesteuert wird und dass in einem durch einen hohen Wert der Drehfrequenz (f) oder Stellgröße (S) **gekennzeichnet**en Mittelleistungsbereich (21) der Kommutierungswinkel ($\alpha$) variiert wird.

**8.** Verfahren nach einem der Ansprüche 1 bis 7,
**dadurch gekennzeichnet, dass** die oder jede Phase (Pi) unipolar angesteuert wird.

**9.** Verfahren nach einem der Ansprüche 1 bis 8,
**dadurch gekennzeichnet, dass** die oder jede Phase (Pi) bipolar angesteuert wird.

**10.** Vorrichtung (9) zur Kommutierung der mindestens einen Phase (Pi) eines Elektromotors (1), mit einem Umrichter (5) und einer Steuereinheit (6) für den Umrichter (5), die zur Ausführung des Verfahrens nach einem der Ansprüche 1 bis 9 ausgebildet ist.

**11.** Vorrichtung (9) nach Anspruch 10,
**gekennzeichnet durch** einen Sensor (8), der die Orientierung und/oder die Drehfrequenz (f) des Erregerfelds (F) bestimmt und der Steuereinheit (6) als Eingangsgröße zuführt.

**Claims**

1. Method for commutating the at least one phase (Pi) of an electric motor (1), in which method the commutation angle (α) of the or each phase (Pi) is continuously varied as a function of the rotation frequency (f) of the electromagnetic excitation field (F) of the electric motor (1) and/or an actuating variable (δ) which is characteristic of the drive power, **characterized in that** a full cycle (10) of the excitation field (F) is split into a number (n) of zones (Zi), and the or each phase (Pi) is commutated in accordance with a control pattern (12, 12') which is stored as a function of these zones (Zi), with the angular extent (δ1, δ2) of at least two zones (Zi) being varied in order to adjust the commutation angle (α).

2. Method according to Claim 1, **characterized in that** the full cycle (10) is divided into zones (Z1) of a first group and zones (Zm) of a second group, which zones alternately follow one another, with zones (Z1, Zm) of the same group each having the same angular extent (δ1, δ2).

3. Method according to Claim 2, **characterized in that** the or each phase (Pi) is driven over an odd number (m) of successive zones (Zi).

4. Method according to one of Claims 1 to 3, **characterized in that** the commutation angle (α) is varied between a minimum value, which corresponds to a low rotation speed (f) and/or power, and a maximum value, which corresponds to a high rotation speed (f) and/or power.

5. Method according to one of Claims 1 to 4, **characterized in that** the actuating variable (S) which is used to adjust the commutation angle (α) and is characteristic of the power is derived on the basis of the rotation frequency (f) and an associated setpoint variable (f0).

6. Method according to one of Claims 1 to 5, **characterized in that** the or each phase (Pi) is driven in a pulse-width-modulated manner as a function of the rotation frequency (f) of the excitation field (F) and/or the actuating variable (S).

7. Method according to Claim 6, **characterized in that** the or each phase (Pi) is driven in a pulse-width-modulated manner in a low-power range (23), which is **characterized by** a low value of the rotation frequency (f) or actuating variable (S), at a constant commutation angle (α), and in that the commutation angle (α) is varied in a medium-power range (21) which is **characterized by** a high value of the rotation frequency (f) or actuating variable (S).

8. Method according to one of Claims 1 to 7, **characterized in that** the or each phase (Pi) is driven in a unipolar manner.

9. Method according to one of Claims 1 to 8, **characterized in that** the or each phase (Pi) is driven in a bipolar manner.

10. Apparatus (9) for commutating the at least one phase (Pi) of an electric motor (1), having a converter (5) and a control unit (6) for the converter (5), which apparatus is designed to execute the method according to one of Claims 1 to 9.

11. Apparatus (9) according to Claim 10, **characterized by** a sensor (8) which determines the orientation and/or the rotation frequency (f) of the excitation field (F) and supplies the said orientation and/or the said rotation frequency to the control unit (6) as an input variable.

**Revendications**

1. Procédé destiné à la commutation d'au moins une phase (Pi) d'un moteur électrique (1), lequel procédé permettant de faire varier en continu l'angle de commutation (α) de la ou des phases (Pi) en fonction de la fréquence de rotation (f) du champ d'excitation électromagnétique (F) du moteur électrique (1) et/ou d'une variable de réglage (S) caractéristique de la puissance motrice, **caractérisé par le fait que** un cycle complet (10) du champ d'excitation (F) est divisé en un nombre (n) de zones (Zi), et que la ou les phases (Pi) sont commutées conformément à un profil de commande (12, 12') enregistré en fonction de ces zones (Zi), l'étendue angulaire (δ1, δ2) étant variée au moins de deux zones (Zi) pour régler l'angle de commutation (α).

2. Procédé selon la revendication 1, **caractérisé par le fait que** le cycle complet (10) est réparti en zones successives alternées (Z1) d'un premier groupe et en zones (Zm) d'un second groupe, les zones (Z1, Zm) du même groupe présentant respectivement la même étendue angulaire ($\delta1$, $\delta2$).

3. Procédé (9) selon la revendication 2, **caractérisé par le fait que** la ou les phases (Pi) sont excitées par un nombre impair (m) de zones successives (Zi).

4. Procédé selon une des revendications 1 à 3, **caractérisé par le fait que** l'angle de commutation ($\alpha$) est varié entre une valeur minimale correspondant à une vitesse de rotation (f) et/ou une puissance faible et une valeur maximale correspondant à une vitesse de rotation (f) et/ou à une puissance élevée.

5. Procédé selon une des revendications 1 à 4, **caractérisé par le fait que** la variable de réglage (S) approchée caractéristique pour la puissance destinée au réglage de l'angle de commutation ($\alpha$) est déduite à l'aide de la fréquence de rotation (f) et d'une variable de consigne (f0) associée.

6. Procédé selon une des revendications 1 à 5, **caractérisé par le fait que** la ou les phases (Pi) sont excitées par modulation de largeur d'impulsion en fonction de la fréquence de rotation (f) du champ d'excitation (F) et/ou de la variable de réglage (S).

7. Procédé selon la revendication 6, **caractérisé par le fait que** la ou les phases (Pi) sont excitées par modulation de largeur d'impulsion dans une plage de basse puissance (23) **caractérisée par** une valeur faible de la fréquence de rotation (f) ou de la variable de réglage (S) avec un angle de commutation constant ($\alpha$) et que l'angle de commutation ($\alpha$) est variée dans une plage de moyenne puissance (21) **caractérisée par** une valeur élevée de la fréquence de rotation (f) ou de la variable de réglage (S).

8. Procédé selon une des revendications 1 à 7, **caractérisé par le fait que** la ou les phases (Pi) sont excitées de manière unipolaire.

9. Procédé selon une des revendications 1 à 8, **caractérisé par le fait que** la ou les phases (Pi) sont excitées de manière bipolaire.

10. Dispositif (9) destiné à la commutation d'au moins une phase (Pi) d'un moteur électrique (1), comportant un convertisseur (5) et une unité de commande (6) destinée au convertisseur (5) et permettant la mise en oeuvre du procédé selon l'une des revendications 1 à 9.

11. Dispositif (9) selon la revendication 10, **caractérisé par** un capteur (8) qui détermine l'orientation et/ou la fréquence de rotation (f) du champ d'excitation (F) et alimente l'unité de commande (6) en tant que variable d'entrée.

# FIG 1

# FIG 2

FIG 3

# FIG 4

FIG 5

FIG 6

# FIG 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2388090 A
- US 6677605 A